# EUROPÄISCHE PATENTSCHRIFT

(11) **EP 0 435 087 B1**
(45) Veröffentlichungstag und Bekanntmachung des Hinweises auf die Patenterteilung: **23.03.1994**
(21) Anmeldenummer: 90124087.9
(22) Anmeldetag: 13.12.1990
(51) Int. Cl.: B65B 19/04

(54) **Zigarettenpacker**
Cigarette packing device
Dispositif d'empaquetage de cigarettes

(30) Priorität: 27.12.1989 DE 3943086
(43) Veröffentlichungstag der Anmeldung: 03.07.1991
(73) Patentinhaber: Maschinenfabrik Alfred Schmermund GmbH & Co., D-58285 Gevelsberg (DE)
(72) Erfinder: Oberdorf, Manfred, D-58285 Gevelsberg (DE)
(74) Vertreter: Sparing Röhl Henseler Patentanwälte

(56) Entgegenhaltungen:
- EP-A- 0 210 544
- DE-U- 8 805 250

## Beschreibung

Die Erfindung betrifft einen Zigarettenpacker mit wenigstens einer taktweise und wenigstens einer kontinuierlich angetriebenen, zur Aufnahme von blockförmigen Gegenständen dienenden, axial offene Zellen aufweisenden Fördereinrichtung, wobei wenigstens eine der kontinuierlich angetriebenen Fördereinrichtungen ein Revolver ist, wobei ferner eine Übergabestation zwischen der taktweise angetriebenen Fördereinrichtung und dem Revolver vorgesehen ist, in der die jeweiligen Zellen in axiale Ausfluchtung miteinander gebracht und die blockförmigen Gegenstände axial überschoben werden.

Bei Zigarettenpackern werden die zu verpackenden, blockförmigen Gegenstände wie Zigarettenblöcke, Innenpakete etc. von Zellen von einzelnen Fördereinrichtungen wie Zellengurten, Revolvern o.dgl. aufgenommen, um die einzelnen Verpackungsvorgänge durchzuführen. Bei den angestrebten, immer höheren Verpackungsgeschwindigkeiten treten bei taktweise betriebenen Revolvern etc. große dynamische Belastungen auf. Deshalb versucht man, von der taktweisen Bewegung weg zur kontinuierlichen Bewegung zu kommen. Da aber trotzdem an gewissen Stellen, etwa im Blockbildungsbereich ein taktweises Arbeiten sinnvoll ist, treten Probleme an den Übergabestellen auf.

Aus der DE-A-3 527 742 ist ein Zigarettenpacker der eingangs genannten Art bekannt, bei dem als taktweise angetriebene Fördereinrichtung ein als Ketten- oder Gurtförderer ausgebildeter Zellenförderer vorgesehen ist, der es ermöglicht, sich mit einem kontinuierlich umlaufenden Revolver in einem Übergabebereich kontinuierlich aufgrund eines die Bewegungsdifferenzen zwischen kontinuierlichem und taktweisem Antrieb ausgleichenden, überlagerten Ausgleichsantrieb mitzubewegen, wobei die Mittel zum Überschieben von Zigarettenblöcken von den Zellen einer Fördereinrichtung in die Zellen der anderen mit dem kontinuierlich umlaufenden Revolver mitbewegt werden müssen. Diese Konstruktion ist sehr aufwendig, zumal zusätzlich zum sicheren Fluchten der Zellen in den jeweiligen Aufnahme- bzw. Abgabepositionen des Zellenförderers besondere Maßnahmen zu treffen sind.

Aufgabe der Erfindung ist es daher, einen Zigarettenpacker der eingangs genannten Art zu schaffen, bei dem eine Übergabe von blockförmigen Gegenständen zwischen einer kontinuierlich angetriebenen und einer taktweise angetriebenen Fördereinrichtung bei hoher Umlaufgeschwindigkeit der kontinuierlich angetriebenen Fördereinrichtung und bei möglichst einfacher Konstruktion ermöglicht wird.

Diese Aufgabe wird dadurch gelöst, daß die Zellen des Revolvers an Schwenkhebeln befestigt sind, die derart kurvengesteuert sind, daß die Zellen im Bereich der Übergabestation vor Erreichen der Übergabeposition durch ihre Normalstellung in die Übergabeposition geschwenkt und während eines für die Übergabe genügend langen Zeitraums in der Übergabeposition gehalten werden, während dem die Zelle praktisch stillsteht.

Die Übergabe der blockförmigen Gegenstände finden in der Ruhephase der getakteten Fördereinrichtung statt, wobei ein relativer Stillstand zwischen den Zellen, zwischen denen die Übergabe der blockförmigen Gegenstände erfolgen soll, erreicht wird, so daß eine genügende Zeit für die Übergabe zur Verfügung steht.

Weitere Ausgestaltungen der Erfindung sind der nachfolgenden Beschreibung und den Unteransprüchen zu entnehmen.

Die Erfindung wird nachstehend anhand des in den beigefügten Abbildungen dargestellten Ausführungsbeispiels näher erläutert.

Fig. 1 zeigt schematisch eine Übergabe von Zigaretten von einem getakteten Zellengurt zu einem kontinuierlich umlaufenden Revolver.

Fig. 2 zeigt ausschnittweise den Revolver von Fig. 1 in Frontansicht.

Fig. 3 zeigt ausschnittweise den Revolver von Fig. 1 teilweise geschnitten.

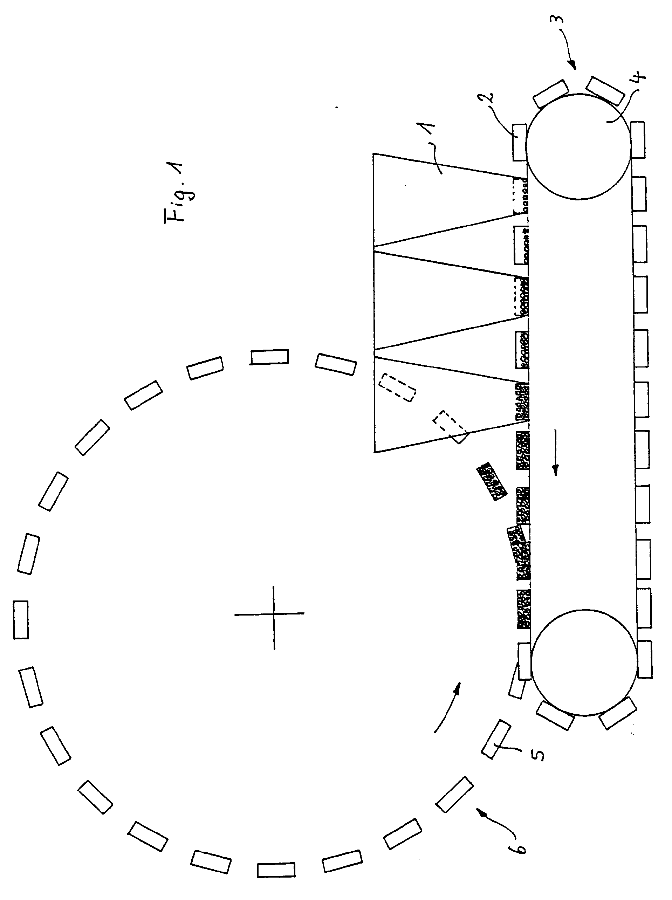

Gemäß Fig. 1 werden Zigaretten aus entsprechenden Zigarettentrichtern 1 reihenweise in Zellen 2 einen Zellengurtes 3 überschoben, um beispielsweise aus drei übereinander angeordneten Reihen von Zigaretten gebildete Zigarettenblöcke zu bilden. Der Zellengurt 3 wird dabei um jeweils eine Zellenteilung über einen entsprechenden, an einem oder beiden Umlenkrädern 4 angreifenden Antrieb weitergeschaltet.

Die in den Zellen 2 des Zellengurtes 3 befindlichen Zigarettenblöcke werden mittels eines Schiebers (nicht dargestellt) jeweils in eine Zelle 5 eines Revolvers 6 übergeben, der mit konstanter Drehgeschwindigkeit umläuft.

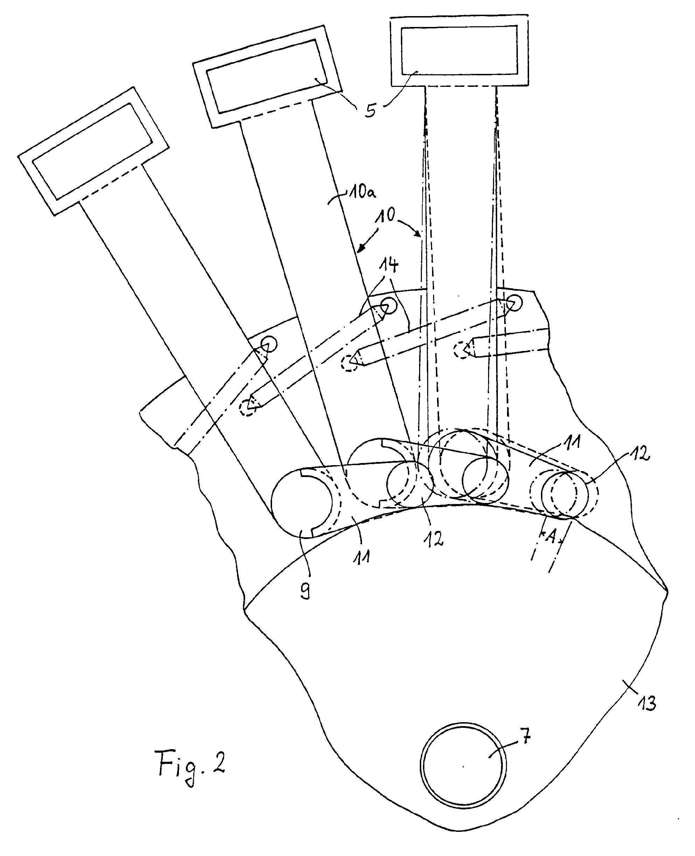

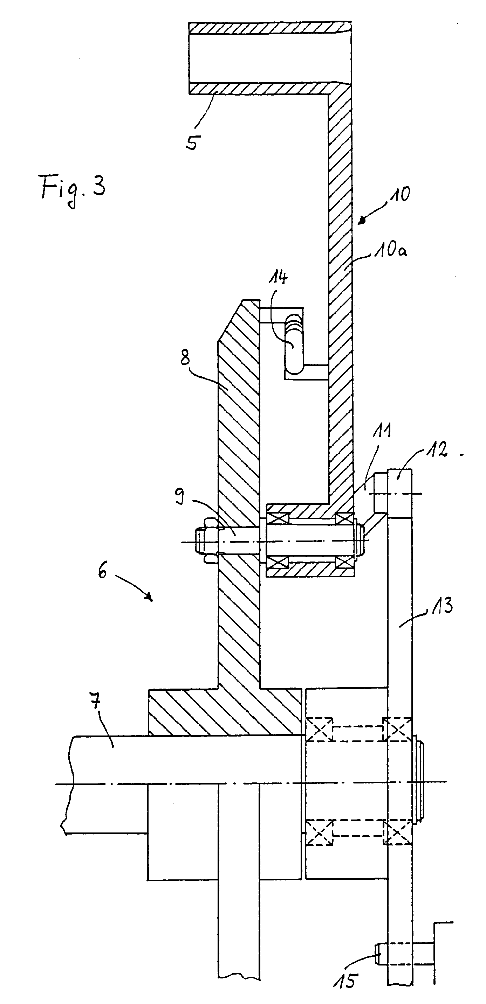

Damit dies geschehen kann, ist der Revolver 6 entsprechend den Fig. 2 und 3 derart ausgebildet, daß die sich mit der Zelle 2 des Zellengurtes 3 fluchtende und damit in Übergabeposition befindliche Zelle 5 des Revolvers 6 während einer für das Überschieben des jeweiligen Zigarettenblocks ausreichenden Zeit in dieser fluchtenden Stellung befindet.

Zu diesem Zweck umfaßt der Revolver 6 eine mit seiner Antriebswelle 7 verbundene Scheibe 8, die eine Vielzahl von Achsen 9 trägt, die koaxial zur Antriebswelle 7 in gleichem Radialabstand hierzu und entsprechend der Zellenteilung des Revolvers 6 äquidistant zueinander angeordnet sind. Auf den Achsen 9 ist jeweils ein Schwenkhebel 10 gelagert, wobei die Schwenkhebel 10 an ihren radial äußeren Enden die Zellen 5 tragen, die in Axialrichtung der Antriebswelle 7 offen sind. Die Schwenkhebel 10 sind jeweils mit einem Arm 11 versehen, der an seinem freien Ende eine Rolle 12 trägt, d.h. daß der Schwenkhebel 10 ein Kniehebel ist. Die Rollen 12 rollen auf dem Umfang einer ortsfesten Kurvenscheibe 13 ab. Damit die Rollen 13 in Eingriff mit der Kurvenscheibe 13 gehalten werden, sind Zugfedern 14 zwischen der Scheibe 8 und den Schwenkhebeln 10 angeordnet, die den jeweiligen Arm 11 in Richtung auf die Kurvenscheibe 13 vorspannen.

Die Kurvenscheibe 13 ist in einem Bereich A abweichend von der ansonsten zur Drehachse der Antriebswelle 7 konzentrischen Form derart ausgebildet, daß die in die Übergabeposition zu einer benachbarten Zelle 2 des Gurtförderers 3 gelangende Zelle 5 kurz vor Erreichen dieser Position durch Verschwenken des die Zelle 5 tragenden Arms 10a des Schwenkhebels 10 aus seiner radialen Normalposition in die Übergabeposition gebracht wird und diese Übergabeposition eine Zeitlang beibehält, indem der Arm 10a fortschreitend bis in eine zur anfänglichen Schwenkposition bezüglich der radialen Position symmetrische Position verschwenkt wird, um dann wieder in die radiale Position zurückgeschwenkt zu werden. Der Arm 10a ist dabei genügend lang auszubilden, damit das an sich beim Verschwenken des Arms 10a bewirkte Kippen der Zelle 5 so geringfügig bleibt, daß der Übergabevorgang hierdurch praktisch nicht gestört wird. Der Arm 10a wird hierbei beispielsweise um einen Gesamtwinkel von maximal ca. 2 bis 4° bezogen auf die radiale Stellung verschwenkt.

Die Kurvenscheibe 13 ist im dargestellten Ausführungsbeispiel auf der Antriebswelle 7 gelagert und mittels eines Stifts 15 ortsfest gegenüber der sich drehenden Antriebswelle 7 gehalten. Sie kann aber auch in anderer Weise ortsfest angeordnet sein. Außerdem kann sie mit einer Axialnut versehen sein, die die Rollen 12 aufnimmt, so daß diese nach beiden Seiten abgestützt werden, so daß die Federn 14 entfallen können. Stattdessen kann auch eine stegförmige Kurve, auf deren beiden Seiten Rollepaare abrollen, vorgesehen sein.

Ein derartiger Revolver 6 kann auch zur Übergabe von Zigarettenblöcken oder anderen blockförmigen Gegenständen wie Innenpaketen, fertigen Päckchen etc. zwischen diesem und einem anderen taktweise angetriebenen Förderer, etwa einem weiteren Revolver, verwendet werden.

## Patentansprüche

1. Zigarettenpacker mit wenigstens einer taktweise und wenigstens einer kontinuierlich angetriebenen, zur Aufnahme von blockförmigen Gegenständen dienenden, axial offene Zellen (2, 5) aufweisenden Fördereinrichtung (1, 6), wobei wenigstens eine der kontinuierlich angetriebenen Fördereinrichtungen ein Revolver (6) ist, wobei ferner eine Übergabestation zwischen der taktweise angetriebenen Fördereinrichtung (7) und dem Revolver (6) vorgesehen ist, in der die jeweiligen Zellen (2, 5) in axiale Ausfluchtung miteinander gebracht und die blockförmigen Gegenstände axial überschoben werden, dadurch **gekennzeichnet**, daß die Zellen (5) des Revolvers (6) an Schwenkhebeln (10) befestigt sind, die derart kurvengesteuert sind, daß die Zellen (5) im Bereich der Übergabestation vor Erreichen der Übergabeposition durch ihre Normalstellung in die Übergabeposition geschwenkt und während eines für die Übergabe genügend langen Zeitraums in der Übergabeposition gehalten werden, während dem die Zelle (5) praktisch stillsteht.

2. Zigarettenpacker nach Anspruch 1, dadurch gekennzeichnet, daß die Schwenkhebel (10) im Bereich der Übergabestation zwischen zwei symmetrisch zu ihrer Normalstellung befindlichen Stellungen über einen Winkelbereich von vorzugsweise etwa 2 bis 4° durch die Kurve (13) verschwenkbar sind.

3. Zigarettenpacker nach Anspruch 1 oder 2, dadurch gekennzeichnet, daß die Schwenkhebel (10) Kniehebel sind, die an einem Ende wenigstens eine mit der Kurve (13) in Eingriff stehende Rolle (12) tragen.

4. Zigarettenpacker nach einem der Ansprüche 1 bis 3, dadurch gekennzeichnet, daß die Schwenkhebel (10) durch Federn (14) gegen die Kurve (13) vorgespannt sind.

## Claims

1. Cigarette packer with at least one intermittently driven (1) and at least one continuously driven (6) conveying device, each having axially open cells (2, 5) serving for receiving block-shaped articles, at least one of the continuously driven conveying devices being a turret (6), there being provided, furthermore, between the intermittently driven conveying device (1) and the turret (6) a transfer station, in which the respective cells (2, 5) are brought into axial alignment with one another and the block-shaped articles are pushed over axially, characterized in that the cells (5) of the turret (6) are fastened to pivoting levers (10) which are cam-controlled in such a way that, in the region of the transfer station, before the transfer position is reached, the cells (5) are pivoted through their normal position into the transfer position and are held in the transfer position for a period of time which is sufficiently long for the transfer and during which the cell (5) is virtually stationary.

2. Cigarette packer according to Claim 1, characterized in that, in the region of the transfer station, the pivoting levers (10) are pivotable by means of the cam (13) between two positions symmetrical to their normal position over an angular sector of preferably approximately 2 to 4°.

3. Cigarette packer according to Claim 1 or 2, characterized in that the pivoting levers (10) are toggle levers which carry at one end at least one roller (12) engaged with the cam (13).

4. Cigarette packer according to one of Claims 1 to 3, characterized in that the pivoting levers (10) are prestressed against the cam (13) by springs (14).

## Revendications

1. Machine à emballer les cigarettes comportant au moins un convoyeur pas à pas et au moins un convoyeur actionné en continu, servant à la réception d'objets en forme de blocs, présentant des cellules ouvertes axialement, au moins l'un des convoyeurs actionnés en continu étant un carrousel, une station de transfert étant en outre prévue entre le convoyeur pas à pas et le carrousel, dans laquelle les cellules respectives sont amenées ensemble en alignement axial et les objets en forme de blocs transférés axialement, caractérisée en ce que les cellules (5) du carrousel (6) sont fixées à des leviers pivotants (10) actionnés par came de telle façon que les cellules (5), au voisinage de la station de transfert, sont pivotées avant l'arrivée dans cette position de transfert, de leur position normale dans la position de transfert, et restent maintenues dans cette position pendant un temps suffisant pour réaliser le transfert, pendant lequel les cellules (5) sont pratiquement immobiles.

2. Machine à emballer les cigarettes selon la revendication 1, caractérisée en ce que les leviers pivotants (10), dans la zone de la station de transfert, sont pivotés par la came (13) entre deux positions symétriques par rapport à leur position normale, dans une plage angulaire de préférence de l'ordre de 2° à 4°.

3. Machine à emballer les cigarettes selon la revendication 1 ou 2, caractérisée en ce que les leviers pivotants (10) sont des leviers coudés qui portent à une extrémité au moins un galet (12) astreint à demeurer en contact avec la came (13).

4. Machine à emballer les cigarettes selon l'une des revendications 1 à 3, caractérisée en ce que les leviers pivotants (10) sont pressés par ressorts (14) contre la came (13).
